# EUROPEAN PATENT SPECIFICATION

(11) **EP 1 816 910 B1**
(45) Date of publication and mention of the grant of the patent: **11.03.2009**
(21) Application number: 05786684.0
(22) Date of filing: 28.09.2005
(51) Int. Cl.: A01K 61/00

(54) **A METHOD OF CULTURING MUSSELS**
VERFAHREN ZUR KULTIVIERUNG VON MIESMUSCHELN
PROCEDE DE CULTURE DES MOULES

(30) Priority: 30.09.2004 IE 20040666
(43) Date of publication of application: 15.08.2007
(73) Proprietor: Ridwan Limited, Bantry Cork (IE)
(72) Inventor: KEOHANE, Michael, Bantry, County Cork (IE)
(74) Representative: Coyle, Philip Aidan
(86) International application number: PCT/IE2005/000109
(87) International publication number: WO 2006/035420

(56) References cited:
- EP-A- 1 466 523
- WO-A-00/60930
- US-A- 3 741 159
- US-A- 3 811 411
- US-A- 4 270 488
- US-B1- 6 325 569

## Description

This invention relates to a method of culturing mussels.

The common or blue mussel (Mytilus edulis) is the world's most commonly farmed mussel. They attach themselves to surfaces using byssus threads produced by a byssus gland at the base of the foot, the threads being directed onto a suitable settlement surface by a groove in the foot.

Mussels reproduce spawn in the early summer, releasing large amounts of sperm and eggs into the water where fertilisation is random. The fertilised eggs develop quickly into a trocophore and veliger larvae. Female mussels can produce up to 250,000 eggs and develop over a 2-6 week period; once the larvae are fully grown they settle and attach themselves to a suitable surface witch byssus threads. Mussels can move over small areas by extending the foot and sticking a byssus thread to the surface and then detaching the old byssus and pulling themselves to where the new thread is attached.

Mussels are found in most of Europe's Marine habitats; their main requirements are a firm attachment surface and silt free environment. They usually form dense colonies on suitable substrates because of their very successful reproductive and recruitment strategies.

Mussels in Europe are presently cultured using a number of different systems:

Rope or Suspended Culture - Conventional suspended systems for growing mussels involve growing mussels on ropes or strips of mesh stocking suspended from floats such as rafts or so-called longlines. Mussel spat/seed can be collected directly from the water (natural seeding), or it can be scrapped off rocks in intertidal areas.

Bouchot Culture - This system is mainly carried out in France. Large wooden poles are staked into the seabed substrate. As in the rope culture of mussels, spat/seed can be collected directly from the water or it can be scrapped off rocks in inter-tidal areas.

Bottom Culture or Dutch System- This system is traditionally carried out in Holland; however, the system is now used in other parts of Europe such as Ireland and Wales. This system of culturing mussel can be described as semi-culture of mussels, in which the production of mussel seed is left entirely to nature. It is a form of extensive culture. Mussels which settle on natural wild mussel beds very often do not grow satisfactorily because of overcrowding, poor feeding and heavy mortality from predators. If seed on such natural beds is transferred to areas where the conditions are more favourable their growth and survival will be greatly improved. This is the basis for most bottom culture of mussels.

However, the fishing of wild seed beds is rigorously controlled by the fisheries authorities in the various different European member states. For example, fishing of these seed beds may be controlled and confined to short periods, to the size of the seed, and to the number of predators present on the bed. A proportion of seed may also have to be left to support other natural wildlife and birds. Also all operators will be confined to the amount of seed they can remove from these beds and all operators will be allocated a quota. Because these beds are naturally occurring they may occur in different locations each year, and if they occur in areas far from the farmers relaying plot, the farmer will inevitably occur more costs and higher mortalities on transporting the seed.

It is an object of the invention to provide a method of culturing mussels in which the effect of the foregoing restrictions is avoided or mitigated.

Accordingly, the present invention provides a method of culturing mussels comprising:
positioning collector materials in marine water above the seabed at locations where mussel spawn can settle on them,
allowing the mussels to grow on the surfaces of the collector materials while the latter remain at said locations,
transferring the mussels to the seabed,
allowing the mussels to grow further on the seabed, and
harvesting the mussels.

By "collector materials" we mean any artificial or naturally occurring materials upon which mussel spawn can settle, such as (but not limited to) ropes, sheets or mesh as used in the existing rope culture system.

The collector materials can either be suspended directly from a raft or any floatation type system or indirectly from the Head Rope of a Long Line. The Head Rope is supported by floats lying on the water surface and is secured in place by means of anchors. Alternatively the collector materials can be poles as in the Bouchot culture method.

In contrast to existing methods, however, the mussels are not allowed to fully mature on the collector materials, but are transferred to the seabed (including intertidal and subtidal areas) for further on-growing before they are mature. The mussels may be transferred to the seabed still on their collector materials, or they may be stripped from the collector materials before transfer. The mussels are transferred to the seabed any time from "spat fall" to 1 year later. The timescale involved will vary depending on the time of year concerned, the water temperature and the particular area involved. The mussels are then allowed to grow for approximately a further 12 months to 2 years before harvesting.

With regard to the quantity and quality of the mussel spat harvested, wild mussel spat is much older when harvested and considerable debris, mud, etc. is also brought up during harvesting. In addition, these mussels once they are transferred to the seabed, take much longer to mature. In contrast, the spat collector method according to the invention involves the harvesting of mussels only and the yield is much greater than that of wild mussels.

The method described above is a feasible alternative to using mussels from wild settled mussel beds. Large quantities of spat can be collected on settlement surfaces such as mesh, nets, rope, etc. It can then be on-grown on these surface until suitably large enough to be transferred as in the bottom culture system of growing mussels.

The invention is not limited to the embodiments described herein which may be modified or varied without departing from the scope of the invention.

## Claims

1. A method of culturing mussels comprising:
positioning collector materials in marine water above the seabed at locations where mussel spawn can settle on them,
allowing the mussels to grow on the surfaces of the collector materials while the latter remain at said locations,
transferring the mussels to the seabed,
allowing the mussels to grow further on the seabed, and
harvesting the mussels.

2. A method as claimed in claim 1, wherein the mussels are transferred to the seabed while still on the collector materials.

3. A method as claimed in claim 1 or 2, wherein the collector materials are suspended from floats.

4. A method as claimed in claim 1 or 2, wherein the collector materials comprise poles staked into the seabed.

5. A method as claimed in any preceding claim, wherein the mussels are transferred to the seabed from spat fall to 1 year later.

6. A method as claimed in claim 5, wherein the mussels are allowed to grow on the seabed for approximately a further 12 months to 2 years before harvesting.

## Patentansprüche

1. Verfahren zum Züchten von Muscheln, welches umfasst:
Positionieren von Sammelmaterialien in Meereswasser über dem Meeresboden an Stellen, an denen sich Muschelbrut ansiedeln kann,
Wachsenlassen der Muscheln auf den Oberflächen der Sammelmaterialien, während die letzteren an den Stellen verbleiben,
Umsetzen der Muscheln auf den Meeresboden,
weiteres Wachsenlassen der Muscheln auf dem Meeresboden und
Ernten der Muscheln.

2. Verfahren nach Anspruch 1, **dadurch gekennzeichnet, dass** die Muschen auf den Meeresboden umgesetzt werden, während sie sich noch auf den Sammelmaterialien befinden.

3. Verfahren nach Anspruch 1 oder 2, **dadurch gekennzeichnet, dass** die Sammelmaterialien an Schwimmerkörpern hängen.

4. Verfahren nach Anspruch 1 oder 2, **dadurch gekennzeichnet, dass** die Sammelmaterialien in den Meeresboden eingesetzte Pfähle umfassen.

5. Verfahren nach einem der vorhergehenden Ansprüche, **dadurch gekennzeichnet, dass** die Muschel vom Festsetzen des Laichs bis zu einem Jahr später umgesetzt werden.

6. Verfahren nach Anspruch 5, **dadurch gekennzeichnet, dass** die Muscheln vor dem Ernten ungefähr weitere 12 Monate bis zwei Jahre auf dem Meeresboden wachsen dürfen.

## Revendications

1. Procédé de culture des moules, comprenant :
• le positionnement de matériaux de collecte dans de l'eau de mer au dessus du fond marin à des emplacements auxquels le frai des moules peut se déposer,
• la possibilité pour les moules de se développer sur les surfaces de matériaux de collecte tandis que ces derniers demeurent auxdits emplacements,
• le transfert des moules vers le fond marin,
• la possibilité pour les moules de se développer davantage sur le fond marin, et
• le ramassage des moules.

2. Procédé selon la revendication 1, dans lequel les moules sont transférées vers le fond marin alors qu'elles se trouvent encore sur les matériaux de collecte.

3. Procédé selon la revendication 1 ou 2, dans lequel les matériaux de collecte sont suspendus à des flotteurs.

4. Procédé selon la revendication 1 ou 2, dans lequel les matériaux de collecte comprennent des perches plantées dans le fond marin.

5. Procédé selon l'une quelconque des revendications précédentes, dans lequel les moules sont transférées vers le fond marin à partir de la chute de naissain à 1 an plus tard.

6. Procédé selon la revendication 5, dans lequel les moules peuvent se développer sur le fond marin d'approximativement 12 mois à 2 ans supplémentaires avant le ramassage.
